# EUROPÄISCHE PATENTSCHRIFT

(11) **EP 3 389 828 B1**
(45) Veröffentlichungstag und Bekanntmachung des Hinweises auf die Patenterteilung: **13.05.2020**
(21) Anmeldenummer: 16836198.8
(22) Anmeldetag: 16.12.2016
(51) Int. Cl.: B01D 53/10, B01D 53/12, B01D 53/30

(54) **VERFAHREN ZUR SEPARIERUNG VON GASFÖRMIGEN UND PARTIKELFÖRMIGEN STOFFEN AUS EINEM GASSTROM MITTELS EINES WIRBELSCHICHTSTRÖMUNGSREAKTORS**
METHOD FOR SEPARATING GASEOUS AND PARTICULATE MATERIALS FROM A GAS FLOW BY MEANS OF A FLUIDISED-BED FLOW REACTOR
PROCÉDÉ DE SÉPARATION DE SUBSTANCES GAZEUSES ET PARTICULAIRES PRÉSENTES DANS UN FLUX DE GAZ AU MOYEN D'UN RÉACTEUR D'ÉCOULEMENT À LIT FLUIDISÉ

(30) Priorität: 18.12.2015 DE 102015122230
(43) Veröffentlichungstag der Anmeldung: 24.10.2018
(73) Patentinhaber: Graf Enviropro GmbH, 61381 Friedrichsdorf / Taunus (DE)
(72) Erfinder: BRAND, Tobias, 63762 Großostheim (DE); GUTPERL, Winfried, 36151 Burghaun (DE); MÖBS, Maria Helena, 61231 Bad Nauheim (DE); TREUBEL, Jochen, 79199 Kirchzarten (DE)
(74) Vertreter: Hebing, Norbert
(86) Internationale Anmeldenummer: PCT/DE2016/100594
(87) Internationale Veröffentlichungsnummer: WO 2017/101913

(56) Entgegenhaltungen:
- EP-A1- 0 490 414
- EP-A1- 2 078 555
- DE-A1- 3 339 317
- US-A1- 2010 147 146
- US-A1- 2013 095 018

## Beschreibung

Die Erfindung bezieht sich auf ein Verfahren zur Separierung von gasförmigen oder partikelförmigen Stoffen aus einem Gasstrom mittels eines Wirbelschichtströmungsreaktors mit einer eine expandierte Wirbelschicht aufnehmenden Wirbelschichtkammer gemäß Anspruch 1.

Ein Beispiel für die Separierung von gasförmigen oder partikelförmigen Stoffen aus einem Gasstrom ist die Abgasreinigung, bei der Schadstoffe und Flugstäube aus einem Abgasstrom entfernt werden. Soweit im Folgenden daher auf Schadstoffe und Abgase verwiesen wird, ist dies beispielhaft zu verstehen und es sind in gleicher Weise gasförmige oder partikelförmige Stoffe in einem Gasstrom gemeint.

Bei der Verbrennung fossiler Brennstoffe, beispielsweise in Kraftwerken, entstehen Abgase. Je nach Schadstoffgehalt der Brennstoffe, insbesondere Schwefel, aber auch Chlor und Schwermetalle, weisen diese Abgase hohe Schadstoffgehalte auf. Je nach Aschegehalt der Brennstoffe sind die Abgase aus Verbrennungsprozessen auch hoch mit Flugstaub beladen, der abhängig vom eingesetzten Verbrennungsverfahren in der Menge und Größe seiner Partikel stark unterschiedlich sein kann. Der Flugstaub ist im Allgemeinen inert. Bestenfalls befinden sich im Flugstaub noch reaktionsfähige Kalziumoxid- oder auch Magnesiumoxid-Bestandteile.

Die in Müllverbrennungsanlagen entstehenden Abgase beinhalten neben Schwefeloxiden weitere Schadstoffe, insbesondere Chlorwasserstoffe, Fluorwasserstoffe sowie Schwermetalle, z. B. Cadmium, Thallium und Quecksilber sowie auch halogenorganische Verbindungen, wie Dioxine und Furane. Um gesetzmäßig vorgegebene Umweltschutzbestimmungen einhalten zu können, sind alle genannten Schadstoffe und Stäube bis auf bestimmte Emissionsgrenzwerte sicher und dauerhaft aus dem Abgasstrom abzuscheiden.

Die in Müllverbrennungsanlagen entstehenden Abgase beinhalten neben Schwefeloxiden weitere Schadstoffe, insbesondere Chlorwasserstoffe, Fluorwasserstoffe sowie Schwermetalle, z. B. Cadmium, Thallium und Quecksilber sowie auch halogenorganische Verbindungen, wie Dioxine und Furane. Um gesetzmäßig vorgegebene Umweltschutzbestimmungen einhalten zu können, sind alle genannten Schadstoffe und Stäube bis auf bestimmte Emissionsgrenzwerte sicher und dauerhaft aus dem Abgasstrom abzuscheiden.

In der Wirbelschicht reagieren die Schadstoffe mit den dort vorhandenen Sorbentien. Voraussetzung dafür, dass dabei nahezu alle Schadstoffe erfasst werden, ist eine durchmischte Wirbelschicht, die eine genügend lange Verweilzeit und damit eine ausreichende Anzahl von Kontakten zwischen den Schadstoffen und den Sorbentien gewährleistet.

Um einen optimalen Betrieb der Wirbelschicht, die als Fluid betrachtet werden kann, zu realisieren, darf insbesondere der Anteil von Großpartikeln (die entsprechende Fraktion wird durch einen Median-Durchmesser d₅₀ von 30 bis 100 µm definiert) und Grobpartikeln (die entsprechende Fraktion wird durch einen Median-Durchmesser d₅₀ größer als 100 µm definiert) in der Flugasche, die in die Wirbelschicht gelangen, nicht zu groß werden. Daher werden diese bei den bisher bekannten Verfahren zuvor mit Hilfe von Vorabscheidern, im Allgemeinen elektrostatisch arbeitende Vorabscheider, weitgehend aus dem Abgasstrom ausgeleitet.

Aus der EP 0 736 321 A1 ist eine Anlage mit einem Wirbelschichtreaktor beschrieben, der insbesondere dazu dient, organische Halogenide aus einem Abgasstrom abzuzweigen. Bei dieser Anlage wird der mit Feststoffen beladene Abgasstrom, der den Reaktor verlässt, einem Separator zugeführt, bei dem es sich vorzugsweise um einen Zyklonabwerden die inerten Feststoffe im gleichen Maße zurückgeführt, wie die Sorbentien, da sie in denselben Pfad abgetrennt werden.

Damit die Wirbelschicht daher nicht zu stark mit inerten Feststoffen (Staubpartikeln) beladen wird, die deren Funktionsfähigkeit einschränken würden, werden diese Feststoffe vor Eintritt in den Reaktor ausgeschieden. Dazu sind Vorabscheider notwendig, die viel Platz benötigen, einen hohen Energieverbrauch haben und hohe Investitionskosten haben.

Aus der DE 33 39 317 A1 sowie der DE 40 39 213 A1 ist eine Vorrichtung zur Abscheidung von festen Komponenten aus einem Gasstrom beschrieben, bei der auf eine Wirbelschichtkammer eine antiparallel zur Wirbelschichtkammer durchströmte Abscheidekammer folgt, die über ihre gesamte Höhe einen seitlichen, zu einem Filter bzw. Elektroabscheider führenden Austritt für den Gasstrom aufweist. Ein Anteil der festen Partikel im Gasstrom wird abgeschieden und fällt in einen unterhalb der Abscheidekammer angeordneten Bunker.

In der US 2010/0147146 wird ein System beschrieben, bei dem unmittelbar auf die Wirbelschichtkammer ein Zyklonabscheider folgt, aus dem der Gasstrom entgegengesetzt zur Gravitation und der Richtung seines Feststoffanteils nach oben abgesaugt wird.

Die EP 2 078 555 A1 beschreibt ein Verfahren zum Reinigen von Abgasen, die einem eine Wirbelschicht aufweisenden ersten Reaktor zugeführt und von dort an einen zweiten, als Strömungsstrecke fungierenden Reaktor weitergleitet werden. Frische Sorbentien werden erst dem zweiten Reaktor zugeführt und von dort mindestens teilweise in den ersten Reaktor weitergeleitet. Wegen dieser Rückführung muss das dem ersten Reaktor zugeführte Abgas frei von einer Großpartikelfraktion sein.

EP 0 490 414 A1 offenbart ein Verfahren zur Entstaubung, Entschwefelung und Entstickung von Verbrennungsabgasen.

Um eine ausreichende Reduzierung der Schadstoffe im Abgasstrom zu erhalten, wird eine gewisse Verweilzeit benötigt, die sicherstellt, dass die Schadstoffe im Abgasstrom an den Sorbentien anhaften und mit diesen reagieren können. Dies setzt im Allgemeinen eine gewisse Höhe des Wirbelschichtreaktors voraus, was wiederum dazu führt, dass solche Reaktoren sehr hoch sind.

Die Erfindung beruht auf der Aufgabe, ein Verfahren zum Betreiben eines Reaktors zu schaffen, das es erlaubt, weitgehend auf eine Feststoffvorabscheidung zu verzichten.

Die Erfindung beruht auch auf der Aufgabe, ein Verfahren zum Betreiben eines Reaktors zu schaffen, das es erlaubt, eine kleinere bzw. niedrigere Bauform als üblich vorzusehen.

Aufgabe der Erfindung ist es auch, ein Verfahren bereit zu stellen, das die Aktivierung und/oder Oxidierung von Produkten aus z. B. einer Abgasreinigung für z. B. den Einsatz in der Zementindustrie, die Löschung von Kalk- und Magnesiumbestandteilen in Aschen, die Kalktrockenlöschung sowie Aktivierung/Dotierung von Adsorbentien ermöglicht.

Zur Lösung der Aufgaben sieht die Erfindung ein Verfahren gemäß Anspruch 1 vor.

Auf diese Weise wird eine ausreichende Verweilzeit des Gasstromes in einer Umgebung mit Sorbentien gewährleistet, da Reaktionen zwischen den zu separierenden Stoffen (Schadstoffen) und den Sorbentien nicht nur in der Wirbelschicht, sondern auch in der Strömungsstrecke erfolgenkönnen. Somit muss die Wirbelschicht nicht so ausgelegt werden, dass nur in ihr die Umsetzung der Schadstoffe zu inerten Feststoffen erfolgt, was eine hohe Bauweise der Wirbelschichtkammer bedingen würde. Vielmehr wird eine Strömungsstecke konzipiert, in der es zur weiteren Umsetzung der Schadstoffe zu inerten Feststoffen kommt.

Vorzugsweise wird die Strömungsstrecke durch eine anti-parallel zur Wirbelschichtkammer verlaufende Strömungskammer realisiert, die an ihrem oberen Ende einen Einlass für den Gasstrom und an ihrem unteren Ende einen seitlichen Auslass für den Gasstrom hat und unterhalb des seitlichen Auslasses in einen Separatorbunker für gravitativ aus dem Gasstrom abgetrennte Feststoffe übergeht.

Der Abstand zwischen dem oberen Einlass am oberen Ende und dem Auslass am unteren Ende der Strömungskammer ist so gewählt, dass die für die Schadstoffreduzierung notwendige Verweilzeit in Verbindung mit der Verweilzeit in der Wirbelschicht erreicht wird.

Der Gasstrom, der aus dem seitlichen Auslass strömt, nimmt Mittel- (Medianwert d₅₀ = 10-30 µm) und Feinpartikelfraktion (Medianwert d₅₀ kleiner als 10 µm) mit, wobei es sich bei den Feststoffen der Mittelpartikelfraktion im Allgemeinen um Sorbentien und Reaktionsprodukte handelt. Die Feststoffe der Großpartikelfraktion fallen aufgrund ihrer Größe und wegen der auf sie einwirkenden Gasströmung gravitativ am seitlichen Auslass vorbei, weiter nach unten und werden in dem Separatorbunker zwischengespeichert. Die Umlenkung des Gasstroms in den Auslass wirkt als Separator für eine Großpartikelfraktion im Gasstrom.

Somit stellt sich folgendes Ablaufschema ein:
Die Wirbelschicht wird vom Gasstrom getragen. Die in der Wirbelschicht befindlichen Feststoffpartikel bilden für die im mittleren Durchmesser kleineren Partikel ein Stützbett.

Die Feststoffe des Stützbettes gehören zu einer Großpartikelfraktion, deren Medianwert für den Durchmesser der Partikel zwischen 30 und 100 µm liegt, d. h. 50% der Partikel dieser Fraktion haben einen kleineren und 50% ein größeren Durchmesser als der Medianwert. Ein solches Stützbett führt zu einer Abbremsung der reaktiven Sorbentien gegenüber der Geschwindigkeit des Gasstromes, so dass deren Verweilzeit in der Wirbelschicht erhöht wird. Das Stützbett darf nicht zu klein sein, da es sonst nicht die beabsichtigte Wirkung entfaltet. Es darf aber auch nicht zu groß sein, sonst kann es zu einem Zusammenbrechen der Wirbelschicht führen oder zu einer Reduzierung der Verweilzeit der Sorbentien in der Wirbelschicht.

Des Weiteren können die Sorbentien, die im Allgemeinen einen kleinen Durchmesser aufweisen, der Mittelpartikelfraktion zugeordnet werden. Diese besitzt einen Medianwert zwischen 10 und 30 µm. Die Sorbentien können durch die chemischen und physikalischen Vorgänge mit den Schadstoffen in der Wirbelschicht auch Feststoffe einer Großpartikelfraktion bilden.

Die in die Wirbelschicht eingetragene bzw. die dort entstehende Großpartikelfraktion, die inerte Feststoffe und reaktive Sorbentien aufweist, wird mit dem Gasstrom zunächst in die Strömungsstrecke ausgetragen und in dem auf die Strömungsstrecke folgenden Separator aus dem Gasstrom abgetrennt. Die Geschwindigkeit des Gasstromes wird dabei so eingestellt, dass die Wirbelschicht expandiert, so dass auch die Großpartikelfraktion durch den Gasstrom aus der Wirbelschicht ausgetragen wird.

Die Austragungsrate der Großpartikelfraktion ist erfindungsgemäß größer als die Zufuhrrate bzw. die Entstehungsrate, so dass dies zu einem Abbau des Stützbettes führen würde. Deswegen wird die vom Gasstrom abgetrennte Großpartikelfraktion in dem Maße in die Wirbelschicht zurückgeführt, dass der Anteil des Stützbettes an der Wirbelschicht im Wesentlichen konstant bleibt. Da die zurückgeführte Großpartikelfraktion auch reaktive Sorbentien enthält, führt dies zu einer besseren Ausnutzung der dem Prozess insgesamt zugeführten Sorbentien.

Dazu wird der folgende Regelmechanismus angewandt: Die Rate der nicht reagierten Schadstoffe in dem Gasstrom nach Verlassen der Strömungsstrecke wird gemessen.

Wenn festgestellt wird, dass sich die Rate der nicht reagierten Schadstoffe im Gasstrom über einen vorgegebenen Sollwert hinaus erhöht hat, wird die Zufuhr von frischen Sorbentien erhöht.

Die Austragungsrate der Großpartikelfraktion ist erfindungsgemäß größer als die Zufuhrrate bzw. die Entstehungsrate, so dass dies zu einem Abbau des Stützbettes führen würde. Deswegen wird die vom Gasstrom abgetrennte Großpartikelfraktion in dem Maße in die Wirbelschicht zurückgeführt, dass der Anteil des Stützbettes an der Wirbelschicht im Wesentlichen konstant bleibt. Da die zurückgeführte Großpartikelfraktion auch reaktive Sorbentien enthält, führt dies zu einer besseren Ausnutzung der dem Prozess insgesamt zugeführten Sorbentien.

Dazu wird der folgende Regelmechanismus angewandt: Die Rate der nicht reagierten Schadstoffe in dem Gasstrom nach Verlassen der Strömungsstrecke wird gemessen.

Wenn festgestellt wird, dass sich die Rate der nicht reagierten Schadstoffe im Gasstrom über einen vorgegebenen Sollwert hinaus erhöht hat, wird die Zufuhr von frischen Sorbentien erhöht.

Die Messung der Rate der nicht reagierten Schadstoffe braucht nicht unmittelbar nach dem Verlassen der Strömungsstrecke erfolgen, sondern kann auch erst am Ende des vollständigen Prozesses erfolgen, der z. B. noch Filterungsschritte umfasst.

Übersteigt die Rate einen vorgegeben Sollwert, ist dies ein Hinweis darauf, dass in der Wirbelschicht nicht genügend reaktive Sorbentien enthalten sind oder deren Verweilzeit zu gering ist: Diesem wird durch die Erhöhung der Zuführungsrate von frischen Sorbentien entgegengewirkt.

Dies erlaubt die folgende Vorgehensweise:
Der dem Wirbelschichtströmungsreaktor zugeführte Gasstrom ist mit Partikeln beladen und wird so der Wirbelschicht zugeführt, wobei die Wirbelschicht so betrieben wird, dass die Rate der mit dem Gasstrom ausgetragenen Großpartikelfraktion nicht kleiner ist als die Rate der mit dem Gasstrom zugeführten Großpartikelfraktion.

Das Verfahren kommt u. a. dann zur Anwendung, wenn Verbrennungsabgase behandelt werden müssen, die stark mit Flugstäuben beladen werden. Die bisher angewandten Verfahren sehen daher - wie oben ausgeführt - vor, dass die Flugstäube dem Gasstrom vor dem Wirbelschichtreaktor entnommen werden.

Die vorliegende Erfindung geht aber einen anderen Weg: Nur die Grobpartikelfraktion wird vor dem Eintritt in die Wirbelschicht gravitativ ausgeschieden, während die Großpartikelfraktion in die Wirbelschicht eingetragen und erst nachfolgend ausgeschleust wird. Nur bei einer sehr hohen Belastung des zu reinigenden Gasstromes mit einer Großpartikelfraktion wird auch bei Anwendung der vorliegenden Erfindung eine Vorabscheidung durchzuführen sein, die aber nur zu einer Teilreduzierung der Belastung mit einer Großpartikelfraktion zu führen braucht und somit mit einem geringen Apparateaufwand erreicht werden kann.

Im Gegensatz zum Stand der Technik wird daher die Großpartikelfraktion im Gasstrom nicht vor dem Wirbelschichtströmungsreaktor abgetrennt, sondern durchläuft zunächst den Reaktor und wird erst danach dem Abgasstrom entnommen.

Dies hat darüber hinaus positive Effekte auf die expandierte Wirbelschicht. Die expandierte Wirbelschicht wird nämlich nicht mit zu großen inerten Feststoffen überladen oder zu stark angereichert. Dies führt zu einem effektiveren gleichmäßigen Betriebsverhalten der expandierten Wirbelschicht und verhindert Druckschwankungen, was sich weiterhin positiv auf die Verfügbarkeit auswirkt. Des Weiteren wird eine gleichmäßigere Konzentration von Sorbentien für die Schadgasentfernung in der expandierten Wirbelschicht aufgebaut. Daraus resultiert zum einen ein geringerer Verbrauch an Sorbentien, da diese effektiver durch höhere Verweilzeit ausgenutzt werden können und zum anderen eine verbesserte Sicherheit in der Einhaltung der Emissionsgrenzwerte, folglich eine deutlich verbesserte Gesamtabscheideleistung.

Die im Separator abgetrennte Großpartikelfraktion, die nicht zurückgeführt wird, wird aus dem Prozess ausgeschieden.

Um während des Betriebes auch bei einem sich ändernden Volumenstrom (Zuführungsrate) des der Wirbelschicht zugeführten Gasstromes eine stabile Wirbelschicht zu erhalten, sieht die Erfindung vor, dass die Rückführungsrate der in den Nebenpfad abgetrennten Feststoffe und reaktiver Sorbentien in Abhängigkeit von der Änderung des Volumenstromes ebenfalls geändert wird.

Dazu wird für einen bestimmten Grundvolumenstrom eine Grundrückführungsrate festgelegt. Erhöht sich der Volumenstrom gegenüber dem Grundvolumenstrom, was mit einem Gasstromsensor feststellbar ist, so wird die Rückführungsrate gegenüber der Grundrückführungsrate angehoben. Erniedrigt sich der Volumenstrom gegenüber dem Grundvolumenstrom, so wird die Rückführungsrate gegenüber der Grundrückführungsrate ebenfalls erniedrigt.

Damit wird erreicht, dass die Feststoffe in der Wirbelschicht stets eine Großpartikelfraktion bilden. Die Wirbelschicht wird weder mit einem zu hohen Anteil an zu schweren Feststoffen überlastet noch wird wegen eines zu geringen Anteils leichter Feststoffe die Verweilzeit der aktiven Sorbentien in der Wirbelschicht verringert.

Unabhängig davon wird die Rückführung von Sorbentien im Hauptpfad von der zu erreichenden Reaktionsrate im Wirbelschichtströmungsreaktor bestimmt.

Zur weiteren Verbesserung der Wirbelschicht sieht die Erfindung vor, dass der Strömungsstrecke ein Prozessfilter nachgeschaltet ist und dass die dort abgetrennten Feststoffe zu einer Mittelpartikelfraktion und einer Feinpartikelfraktion gehören, die in die Wirbelschicht prozessabhängig zurückgeführt werden.

Um die Abscheidungsrate noch weiter zu verbessern, wird zusätzlich vorgeschlagen, dass sich an den Auslass der ersten Strömungsstrecke eine Zusatzströmungsstrecke anschließt.

Auch in der Zusatzströmungsstrecke reagieren noch Schadstoffe mit den Sorbentien zu inerten Feststoffen, die z. B. an einem auf die Strömungsstrecken folgenden Filter abgeschieden werden.

Die sich in dem Separatorbunker sammelnden Feststoffe können von einem Gas (Luft) durchströmt werden, wobei Feststoffe der Mittel- und Feinpartikelfraktion wieder mit nach oben in den Gasstrom genommen und zum Auslass geführt werden. Dadurch befindet sich in dem Separatorbunker nahezu nur noch eine Großpartikelfraktion, die nach dem oben erwähnten Schema teilweise in die Wirbelschicht zurückgeführt wird.

Dem Auslass ist ein Prozessfilter nachgeordnet. Dort werden Feststoffe der Mittel- und Feinpartikelfraktion abgetrennt, die zu einem hohen Anteil aus noch nicht abreagierten Sorbentien bestehen und im Filterbunker gesammelt werden. Von hier werden sie ebenfalls geregelt in die Wirbelschicht zurückgeführt, um eine expandierte Wirbelschicht zu realisieren.

Die in Müllverbrennungsanlagen entstehenden Abgase beinhalten im Allgemeinen neben Schwefeloxiden weitere Schadstoffe, insbesondere sowohl Chlorwasserstoffe, Fluorwasserstoffe als auch Schwermetalle, z. B. Cadmium, Thallium und Quecksilber sowie halogenorganische Verbindungen wie Dioxine und Furane. Um z. B. Schwefeldioxide aus dem Abgas zu entfernen, werden in den Wirbelschichtabschnitt kalziumhaltige Sorbentien (z. B. Ca(OH)₂) eingebracht, die sich mit dem Schwefeldioxid verbinden. Die kalziumhaltigen Sorbentien verbinden sich aber auch mit dem Chlorwasserstoff (HCl) im Abgas, so dass Kalziumchlorid (CaCl₂) entsteht. Kalziumchlorid ist aber stark hygroskopisch und nimmt deshalb Wasser aus dem Abgas in seine Kristallstruktur auf. Wenn die Temperatur etwas oberhalb der Raumtemperatur liegt, löst sich das Kalziumchlorid in seinem eigenen Kristallwasser, wobei eine klebrige, zu Agglomeration neigende Masse entsteht, die außerdem korrosiv wirkt.

Aufgrund dieses Zusammenhangs muss bei einem entsprechenden Wassergehalt des Abgases die Temperatur des Abgases erhöht werden. Wenn z. B. Chlorwasserstoff (HCl)[mg/m³, Normzustand, trocken]und Schwefeloxide (SOₓ) [mg/m³, Normzustand, trocken]in einem Verhältnis von HCl/SOₓ > 1 stehen, dann muss die Abgastemperatur auf ca. 140°C oder mehr erhöht werden.

In diesem Temperaturbereich ist aber die Schadstoffabscheidung mit Kalkhydrat, das eine Standardqualität (BET: 14 - 16 m²/g)besitzt, sehr uneffektiv, der optimale Temperaturbereich zur Abgasreinigung mit diesem Kalkhydrat liegt nämlich - abhängig vom Abstand zur Kühlgrenztemperatur - zwischen 70 - 90 °C. Dieser an sich optimale Temperaturbereich zur Abgasreinigung mit Kalkhydrat kann aber aus den genannten Gründen bei einem hohen Chlorwasserstoffanteil (HCl) im Abgas nicht genutzt werden. Dieses Problem kann, wie unten beschrieben, behoben werden: Wenn sehr hohe Anforderungen an die Emissionen bzw. Abscheidegrade gestellt werden, wird der oben beschriebene Wirbelschichtströmungsreaktor durch einen Vorschaltreaktor ergänzt, so dass insbesondere neben Schwefeloxiden z. B. auch Chlorwasserstoffanteile aus dem Abgas optimal entfernt werden können.

Zur Lösung der Aufgabe sieht die Erfindung daher vor, dass der dem Wirbelschichtströmungsreaktor zugeleitete Gasstrom zuvor durch einen als Strömungskammer ausgebildeten Vorschaltreaktor geleitet wird.

Dies ermöglicht es, Schadstoffe, die aufgrund der chemischen Vorgänge in der Wirbelschicht bei der Reaktion mit Kalkhydrat zu Agglomerationen neigen, zuvor im Vorschaltreaktor im Abgas zu reduzieren.

Dazu beinhaltet der Vorschaltreaktor Sorbentien, die den Abbau einer ersten Schadstoffart bei der Temperatur des Abgases begünstigt.

Dadurch kann die Wirbelschichtkammer des Wirbelschichtströmungsreaktors Sorbentien beinhalten, die den Abbau einer zweiten Schadstoffart bei einer Temperatur begünstigt, die niedriger ist, als die Temperatur des Gasstromes bei Eintritt in den Vorschaltreaktor, wobei die Reduzierung der Temperatur in der Wirbelschichtkammer in einfacher Weise durch Quenchen, also durch Wasserzugabe, erfolgen kann.

Vorzugsweise handelt es sich bei den Schadstoffen der ersten Art um Chlorwasserstoff und bei den Sorbentien in der Wirbelschichtkammer um eine Kalziumverbindung.

Die Abgasreinigung mit Vorschaltreaktor zur Gas- und Feststoffabscheidung hat mehrere Vorteile:
Die Betriebskosten werden deutlich reduziert, da jedes Sorbens in dem dafür vorgesehenen Temperaturbereich eingesetzt wird.
Es werden bei einem Minimum an Sorbensverbrauch sehr niedrige Emissionswerte von HCl und SOₓ im Abgas erreicht.
Reaktives Sorbens wird abgeschieden und in optimaler Umgebung rezirkuliert, wodurch der Sorbensverbrauch reduziert und die Verweilzeit bei gleicher Bauhöhe der Anlage erhöht wird.
Die Betriebssicherheit der Anlage ist verbessert, da Chlorwasserstoffanteile im Abgas vorwiegend im Vorschaltreaktor mit Natriumhydrogenkarbonat abgeschieden werden.
Das dabei entstehende Natriumchlorid ist im Gegensatz zum Kalziumchlorid nicht hygroskopisch oder korrosiv und dadurch unkritisch im Betrieb.

Für bestimmte Prozesse wird in den Vorschaltreaktor als Sorbens Natriumhydrogenkarbonat (NaHCO₃) in einer geeigneten Partikelgrößenverteilung eingebracht.

Zusätzlich kann Natriumhydrogenkarbonat in einer geeigneten Partikelgrößenverteilung in die Wirbelschicht eingebracht werden, da hier aufgrund der niedrigeren Geschwindigkeit eine relativ lange Verweilzeit gegeben ist. Natriumhydrogenkarbonat ist auch bei gequenchter Temperatur in der Wirbelschichtkammer noch reaktiv und kann im Vorschaltreaktor nicht abgeschiedene Schadgase weiter abscheiden.

Um eine Anpassung an verschiedene Einsatzarten des erfindungsgemäßen Wirbelschichtströmungsreaktors vornehmen zu können, kann vorgesehen werden, dass Teile des Gasstroms in einer Betriebsumfahrung vom Einlass zum Wirbelschichtreaktor unter Umgehung des Gasbeschleunigers des Wirbelschichtreaktors unmittelbar in die Wirbelschicht geleitet werden.

Die oben erwähnten Regelschritte, die auf eine Messung der Restbelastung des Gasstroms mit Schadstoffen zurückgehen, können auch dann angewandt werden, wenn keine Strömungsstrecke der Wirbelschicht nachgeordnet ist.

Das oben beschriebene Verfahren lässt sich besonders gut mit einem Wirbelschichtströmungsreaktor gemäß der deutschen Patentanmeldung DE 10 2015 122 222.1 vom 18.12.2015 durchführen, die vom Anmelder beim Deutschen Patent- und Markenamt eingereicht worden ist.

Im Folgenden soll anhand eines Ausführungsbeispiels die Erfindung näher erläutert werden. Dazu zeigt die
- Fig. 1: eine schematische Darstellung der Erfindung an Hand einer schematischen Wiedergabe des zu dem Verfahren gehörenden Apparateaufbaus,
- Fig. 2: eine Blockschaltbild-Darstellung der Ausführung nach Fig. 1 mit optionalen Ergänzungen,
- Fig. 3: eine schematische Darstellung eines erfindungsgemäßen Wirbelschichtströmungsreaktors mit einem zusätzlichen Vorschaltreaktor und
- Fig. 4: eine Blockschaltbild-Darstellung der Ausführung nach Fig. 3 mit optionalen Ergänzungen.

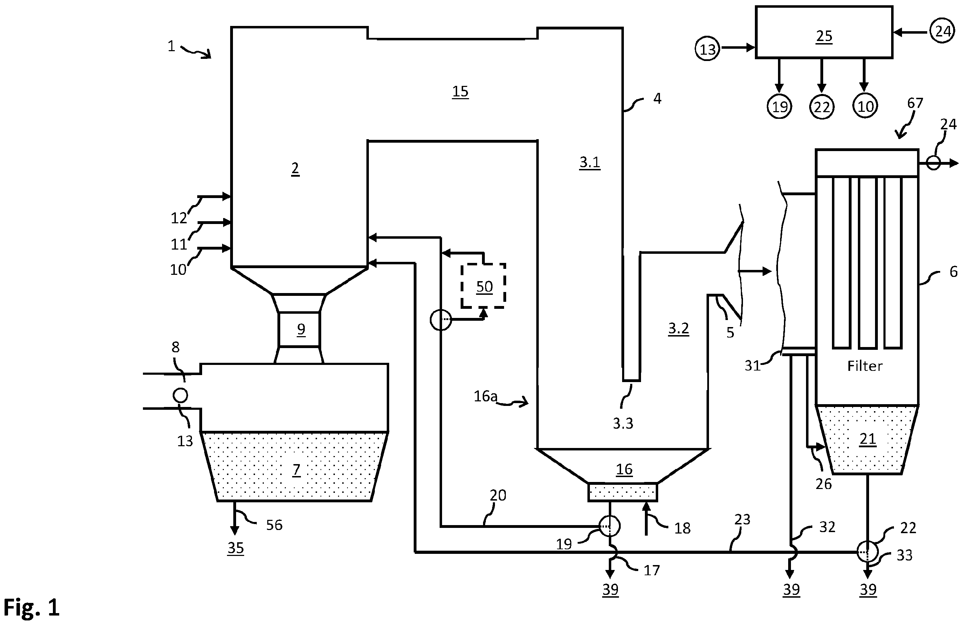

Abgase, die in einem Verbrennungsprozess entstanden sind und mit gasförmigen und/oder partikelförmigen Stoffen-hierbei handelt es sich im Allgemeinen um Schadstoffe und um Stäube - beladen sind, werden einem Wirbelschichtströmungsreaktor 1 zugeleitet, der eine Wirbelschicht aufweisende Wirbelschichtkammer 2 und eine antiparallel dazu geführte Strömungsstrecke 3.1 in Form einer Strömungskammer 4 aufweist. Die Strömungsstrecke 3.1 verläuft ausgehend vom Ausgang der Wirbelschichtkammer 2 vertikal nach unten und geht an ihrem unteren Ende entweder in einen Auslass zu einem Prozessfilter 6 oder optional - wie in Fig. 1 gezeigt - über eine Umlenkung 3.3 in eine Zusatzströmungsstrecke 3.2 über, die sich vertikal nach oben erstreckt und an ihrem oberen Ende in einen versetzten Auslass 5 übergeht. Die Zusatzströmungsstrecke 3.2 ist kürzer als die Strömungsstrecke 3.1.

Der Prozessfilter 6 kann z. B. als Schlauchfilter mit Eintrittshaube, die eine integrierte Feststoffabscheidung 31 aufweist, ausgeführt sein. Unterhalb des Prozessfilters 6 befindet sich ein Filterbunker 21, in dem die abgeschiedenen Feststoffe gesammelt und von dort entweder über eine Hauptrückführleitung 23 rezirkuliert oder über einen Abzweigpunkt 33 ausgeschleust werden.

Die mit gasförmigen Schadstoffen und Feststoffpartikeln (Stäuben) beladenen Abgase treten - je nach ihrer Herkunft - mit einer Temperatur zwischen 120 °C und 240 °C in den Wirbelschichtströmungsreaktor 1 ein. Handelt es sich bei den Abgasen um Prozessabgase aus der Aluminiumelektrolyse oder aus Sinterprozessen, können die Eintrittstemperaturen sehr stark zwischen z. B. ca. 40 °C bis 300 °C variieren. Der Druck vor dem Wirbelschichtströmungsreaktor 1 kann in weiten Bereichen zwischen -70 mbar bis +15 mbar variieren.

Unterhalb der Wirbelschichtkammer 2 befindet sich eine Absetzkammer 7. Der zu reinigende Abgasstrom tritt seitlich über eine Zuführungsleitung 8 in die Absetzkammer 7 ein und strömt von dort durch einen Gasbeschleuniger 9 nach oben in die Wirbelschichtkammer 2 ein. Der Gasbeschleuniger 9 besteht aus einer oder mehreren Venturidüsen, ggf. auch unterschiedlicher Geometrie. An den Gasbeschleuniger 9 schließt sich eine konische Übergangstrecke zu einem zylindrischen Abschnitt der Wirbelschichtkammer 2 an.

In der Absetzkammer 7 werden überwiegend Feststoffe der Grobpartikelfraktion und ein Teil der Großpartikelfraktion aus der Flugasche gravitativ abgeschieden.

In dem Gasbeschleuniger 9 wird der Abgasstrom zunächst auf eine Geschwindigkeit von 25 - 80 m/s beschleunigt und dann auf optimale Verhältnisse für eine Gas-Feststoff-Mischung eingestellt, die zwischen 2 m/s bis 8 m/s, bestenfalls zwischen 3 m/s und 6 m/s liegt.

Die mittlere Beladungsdichte über die Höhe der Wirbelschicht des Reaktors kann in weiten Grenzen von 200 g/m³, Normzustand bis 2.000 g/m³, Normzustand eingestellt werden. Um in der expandierten Wirbelschicht einen besonders effizienten Druckverlust einzustellen, sollte sie im besten Fall zwischen 200 g/m³, Normzustand und 1.000 g/m³, Normzustand betragen.

Die mittlere Teilchengröße der eingesetzten Sorbentien kann in weiten Bereichen von 1 µm bis 400 µm variieren. Aus prozesstechnischen Gründen sind Partikelgrößen von 3 µm - 40 µm anzustreben.

Um eine möglichst effektive Feststoff-Gas-Mischung zu erzielen und die Kontaktzeit zwischen den Sorbentien und den im Abgasstrom befindlichen Schadstoffen zu erhöhen, wird der stündliche Umlauf der Sorbentien auf das 20- bis 200-fache der in der expandierten Wirbelschicht befindlichen Menge an Sorbentien eingestellt.

Die unterschiedlichen Zustände der expandierten Wirbelschicht basieren auf den eingestellten Parametern der Gas- und Feststoffverhältnisse. Die Gasgeschwindigkeit muss so gewählt sein, dass die Feststoffe in der Wirbelschicht über die Höhe der Wirbelschicht ausgetragen werden. Die Feststoffe werden innerhalb der expandierten Wirbelschicht bis zum Ausgang der Wirbelschichtkammer 2 transportiert und in die Strömungsstrecke 3.1 weitergeleitet. Der Feststoffpartikeltransport geschieht mit einer Zeitdifferenz zur Gasgeschwindigkeit. Eine hohe Relativgeschwindigkeit und ein hoher Mischgrad zwischen Gas und Feststoff sind ausschlaggebend für einen optimalen Stoff- und Wärmeübergang.

An der Wirbelschichtkammer 2 befinden sich weiterhin Anschlüsse 10, 11, 12 für die Zugabe von Sorbentien, von Additiven und von Wasser oder Wasserdampf.

Ein Gasstromsensor 13 an der Gaszuführung 8 erlaubt es, den Volumenstrom, also das pro Zeiteinheit durch die Gaszuführung strömende und in den Wirbelschichtströmungsreaktor eintretende Volumen zu messen.

Der mit Feststoffen beladene Abgasstrom verlässt die Wirbelschichtkammer 2 an ihrem oberen Ende über eine Querverbindung 15 zur Strömungskammer 4. Der Abgasstrom erfährt eine Umlenkung und strömt nun durch die Strömungskammer 4 antiparallel zur Strömungsrichtung in der Wirbelschichtkammer 2 zunächst nach unten. In der Strömungskammer bewegen sich der komplette Abgasstrom, die von ihm getragenen noch reaktiven Sorbentien und noch nicht reagierte Schadstoffe im Gleichstrom mit einer konstanten Geschwindigkeit. Die Relativgeschwindigkeit zwischen den Sorbentien und den Schadstoffen ist in der Strömungsstrecke gering, so dass die Schadstoffe sich an die Sorbentien anlagern können, bzw. schon angelagerte Schadstoffe in die Sorbentien eindiffundieren und mit diesen reagieren können. Solche diffusionsgesteuerte innere Stoffübergänge finden überwiegend statt.

Die Verweilzeit in der Strömungsstrecke 3.1 und in der Zusatzströmungsstrecke 3.2 beträgt zusammen zwischen 0,2 und 4 s, am besten zwischen 0,4 und 2 s.

Die Gasgeschwindigkeit in der Strömungsstrecke 3.1 und in der Zusatzströmungsstrecke 3.2 beträgt zusammen zwischen 4 und 16 m/s, am besten zwischen 6 und 12 m/s.

Die Gasgeschwindigkeit am Auslass ist erhöht und beträgt somit zwischen 6 und 18 m/s, am besten zwischen 8 und 16 m/s.

Produkte des Prozesses bilden hier ihre Kristallstruktur aus und binden Kristallwasser ein. Damit verbunden ist eine Trocknung des Produktes, die in der Strömungsstrecke abgeschlossen wird.

Jedenfalls wird in der Strömungsstrecke 3.1 und in der Zusatzströmungsstrecke 3.2 der Anteil, der nicht reagierten Schadstoffe weiter verringert.

Die Länge der Strömungsstrecke 3.1 und der Zusatzströmungsstrecke 3.2 und damit die sich aus der Gasgeschwindigkeit ergebende Verweilzeit wird so eingestellt, dass der Anteil der noch nicht reagierten Schadstoffe darin nochmals deutlich verringert wird. Typische Werte der Verweilzeit sind daher größer als 1 s.

Beträgt der Anteil der nicht reagierten Schadstoffe am Eintritt in die Strömungsstrecke beispielsweise noch ca. 20%, liegt er beim Verlassen der Strömungsstrecke nur noch bei 10%, bezogen jeweils auf die Schadstofflast von 100% beim Eintritt in die Wirbelschicht.

Zwischen dem Auslass 5 und dem Eintritt in den Prozessfilter 6 kann, wie oben schon erwähnt, noch eine Zusatzströmungsstrecke 3.2 angeordnet sein. Hier finden die gleichen Prozesse statt wie in der Strömungsstrecke 3.1, so dass der Abgasstrom mit einem noch geringeren Anteil an noch nicht reagierten Schadstoffen in den Prozessfilter gelangt.

Da der Abgasstrom am Ende der Strömungsstrecke 3.1 seitlich in die Umlenkung 3.3 abgelenkt wird, trennen sich Feststoffe der Großpartikelfraktion aus dem Abgasstrom und fallen unter dem Einfluss der Schwerkraft nach unten in einen Separatorbunker 16. Unterhalb der Umlenkung 3.3 vergrößert sich der Durchmesser der Strömungskammer, so dass sich die Geschwindigkeit der Strömung beim Eintritt in den Separatorbunker 16 verkleinert. Auch dies trägt dazu bei, dass die Feststoffe der Großpartikelfraktion in den Separatorbunker 16 gelangen.

Eine weitere gewichtsselektive Separierung von Feststoffen erfolgt in der Zusatzströmungsstrecke 3.2, da hier die Gravitation auf die Feststoffe gegen die auf sie einwirkenden Strömungskräfte arbeitet.

Im Auslass 5 kann sich ein Gasverteiler befinden, der die Gasströmung in den Prozessfilter optimiert und der bestenfalls auch die Feststoffe der Großpartikelfraktion, soweit diese vom Abgasstrom mitgerissen worden sind, ablenkt und nach unten zum Filterbunker 21 leitet.

Um die Selektivität des Separators 16a zu verbessern, wird der Separatorbunker 16 von unten mit Luft (Luftanschluss 18) durchströmt, wodurch die darin sich befindenden Feststoffe fluidisiert werden, so dass solche Feststoffpartikel, die kleiner sind als die Feststoffpartikel der Großpartikelpartikelfraktion, wieder nach oben zum Auslass 5 getrieben werden.

Da die Großpartikelfraktion vor dem Eintritt des Abgasstroms in den Prozessfilter aus dem Abgasstrom abgetrennt wird, ist die mechanische Belastung des Prozessfilters mit abrasiven Feststoffen gering, da diese sich überwiegend in der abgetrennten Großpartikelfraktion befinden.

In der Ausleitung 17 aus dem Separatorbunker 16, in dem sich nun im Wesentlichen eine Großpartikelfraktion befindet, ist eine Dosiereinrichtung 19 vorgesehen, die die Feststoffmenge, die über eine Nebenrückführleitung 20 in die Wirbelschichtkammer 2 zurückgeführt wird, regelt. Diese Nebenrückführleitung 20 bildet einen Nebenpfad zur Hauptrückführleitung 23 aus dem Filterbunker 21 in die Wirbelschichtkammer 2.

Im Separatorbunker 16 befinden sich auch beispielweise zu 1% noch reaktive Sorbentien, die zusammen mit den inerten Feststoffen in die Wirbelschicht zurückgeführt werden Zusammen mit frisch zugeleiteten reaktiven Sorbentien wird damit der Anteil der reaktiven Sorbentien in der Wirbelschicht weitgehend konstant gehalten.

Optional kann die Feststoffmenge in der Nebenrückführung zumindest teilweise über einen Aktivator 50 (z. B. Feuchtebenetzung, Oxidation Sichtung/Mahlung) geleitet werden, wie sie beispielhaft in der Fig. 1 angedeutet ist.

Allerdings wird nur ein kleinerer Teil des Inhalts des Separatorbunkers 16 zurückgeführt, nämlich nur so viel, wie dies zum Erhalt und zur Stabilisierung des Stützbettes notwendig ist, wobei als zusätzlicher Effekt auch die in der Rückführung vorhandenen Sorbentien ausgenutzt werden. Der Rest wird ausgeschleust. Dies hat darüber hinaus den Vorteil, dass entzündliche Zusätze, die der Wirbelschicht z. B. zur Reduzierung von Quecksilber im Abgas zugesetzt worden sind, hier sicher gesammelt werden können.

Unterhalb des Prozessfilters 6 befindet sich der Filterbunker 21, in dem die am Prozessfilter 6 abgeschiedene Mittel- und Feinpartikelfraktion aufgenommen wird. Über eine Dosiereinrichtung 22 in der Hauptrückführleitung 23 wird Feststoff der Mittel- und Feinpartikelfraktion aus dem Filterbunker 21 in die Wirbelschichtkammer 2 zurückgeführt.

Diese Hauptrückführleitung bildet einen Hauptpfad der Rückführung. Die Mittelpartikelfraktion enthält noch reaktive Sorbentien, die überwiegend in die Wirbelschicht, die zum größten Teil aus rückgeführten Sorbentien besteht, zurückgeführt werden können.

Am Gasausgang des Prozessfilters 6 befindet sich ein Gassensor 24 zur Schadgasmessung, der die Restbelastung des Abgases mit Schadstoffen misst.

Weiterhin ist eine Regeleinrichtung 25 vorgesehen, die Messsignale von dem Gasstromsensor 13 und dem Gassensor 24 zur Schadgasmessung erhält und auf Grund des im Folgenden beschriebenen Verfahrens, das in der Regeleinrichtung 25 implementiert ist, für eine Rückführung von Feststoffen der Großpartikelfraktion bzw. von Sorbentien in die Wirbelschicht die beiden Dosiereinrichtungen 19, 22 und für die Zufuhr von frischen Sorbentien den Anschluss 10 für Sorbentien ansteuert.

Das Verfahren sieht vor, dass die Restschadstoffkonzentration am Gasausgang des Prozessfilters 6 gemessen wird. Übersteigt diese einen vorgegebenen Sollwert, wird die Zuführungsrate von frischen Sorbentien am Anschluss 10 erhöht.

Die Wirbelschicht, das heißt ihre Feststoffzusammensetzung als Großpartikelfraktion, muss geregelt werden. Mit der Einhaltung der Großpartikelfraktion in der Wirbelschicht wird diese stabilisiert. Die Feststoffzusammensetzung wird aber beeinflusst durch den Eintrag von Feststoffen durch den Gasstrom. Ändert sich im Betrieb dessen Volumenstrom, wird eine Regelung notwendig, die wie folgt arbeitet:
Zunächst wird eine Grundarbeitsposition festgelegt: Zu einem bestimmten Grundvolumenstrom, der zu 100% gesetzt wird, wird empirisch eine Grundrückführungsrate von Feststoffen und aktiven Sorbentien aus den Separatorbunker 16 bestimmt und festgelegt.

Während des Betriebs wird mit Hilfe des Gasstromsensors 13 der Volumenstrom gemessen. Wird ein Volumenstrom gemessen, der gegenüber dem Grundvolumenstrom erhöht ist, so wird die Rückführungsrate gegenüber der Grundrückführungsrate angehoben. Wird ein Volumenstrom gemessen, der gegenüber dem Grundvolumenstrom erniedrigt ist, so wird die Rückführungsrate gegenüber der Grundrückführungsrate gesenkt. Die Rückführungsrate wird somit im Betrieb laufend an den Volumenstrom des Gasstromes angepasst, der in die Wirbelschicht eintritt.

Damit wird erreicht, dass die Feststoffe in der Wirbelschicht stets eine Großpartikelfraktion bilden. Die Wirbelschicht wird weder mit einem zu hohen Anteil an zu schweren Feststoffen überlastet noch wird wegen eines zu geringen Anteils leichter Feststoffe die Verweilzeit der aktiven Sorbentien in der Wirbelschicht verringert.

Die Dosiereinrichtung 19 am Separator 16a wird auch dazu genutzt, den Anteil der Großpartikelfraktion, der für die Rückführung in die Wirbelschicht nicht benötigt wird, aus dem Prozess auszuschleusen.

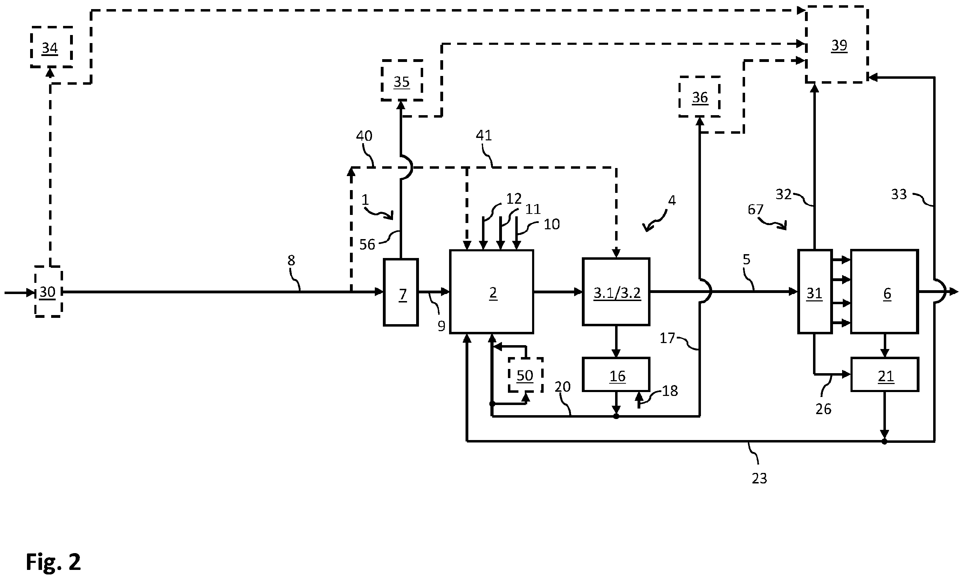

Fig. 2 zeigt die Ausführung nach Fig. 1 in einer Blockschaltbild-Darstellung, wobei zur Bezeichnung derselben Komponenten dieselben Bezugszeichen verwendet werden. Zusätzlich werden einige mögliche Ergänzungen der Anlage gezeigt.

Die Anlage besitzt mehrere Abzweigpunkte, an denen Feststoffe in unterschiedlicher Qualität anfallen.

Diese sind ein optional eingesetzter Vorabscheider 30, die Absetzkammer 7, der Separatorbunker 16 sowie der Filterbunker 21. Soweit der Prozessfilter 6 als Schlauchfilter mit Filterbunker 21 und mit Eintrittshaube und einer integrierten Feststoffabscheidung 31 ausgeführt ist, weist Filteranlage 67 neben dem Abzweigpunkt 33 auch einen weiteren Abzweigpunkt 32 auf.

Die Feststoffabscheidung 31 besitzt außerdem eine gesonderte Leitung 26 zum Filterbunker 21.

Jeder dieser Abzweigpunkte ist mit einem gesonderten Silo 34, 35, 36 verbunden, so dass die an den Abzweigpunkten anfallenden Stoffe gesondert und getrennt von den jeweils anderen Stoffen einer Weiterverarbeitung zugeführt werden können. Je nachdem welcher Prozess in der Anlage durchgeführt wird, sind die vorhandenen Stoffe noch werthaltig.

In einem Sammelsilo 39 können auch Mischungen der Stoffe erstellt werden.

Eine weitere Maßnahme betrifft die Variation der Einsatzmöglichkeiten der Anlage. Einige Anlagen werden saisonal oder je nach Bedarf mit sehr unterschiedlichen Arten von Abgasen beaufschlagt, wobei auch die jeweils einzuhaltenden Restschadstoffkonzentrationen und/oder die Abgasvolumenströme sehr unterschiedlich sein können.

Die Arbeitsweise bezüglich des Volumenstroms der Anlage wird aber insbesondere durch die Auswahl der Abmessung des Gasbeschleunigers 9 bestimmt.

Um hier bei einem Wechsel der Betriebsweise, die einen höheren Abgasvolumenstrom erfordert, keinen Umbau vornehmen zu müssen, ist vorgesehen, dass eine zuschaltbare Betriebsumfahrung 40 vom Gaseinlass unter Umgehung des Gasbeschleunigers 9 direkt in die Wirbelschichtkammer 2 vorhanden ist.

Um hier bei einem Wechsel der Betriebsweise, die eine höhere Restschadstoffkonzentration erlaubt, Energie und Sorbens einzusparen, ist vorgesehen, dass eine zuschaltbare Betriebsumfahrung 41 vom Gaseinlass unter Umgehung des Gasbeschleunigers 9 und der Wirbelschichtkammer 2 in die Strömungsstrecke 3.1 vorhanden ist. Der Hauptstrom geht durch den Gasbeschleuniger 9 und wird nachfolgend mit dem ungereinigten Teilstrom der Betriebsumfahrung gemischt.

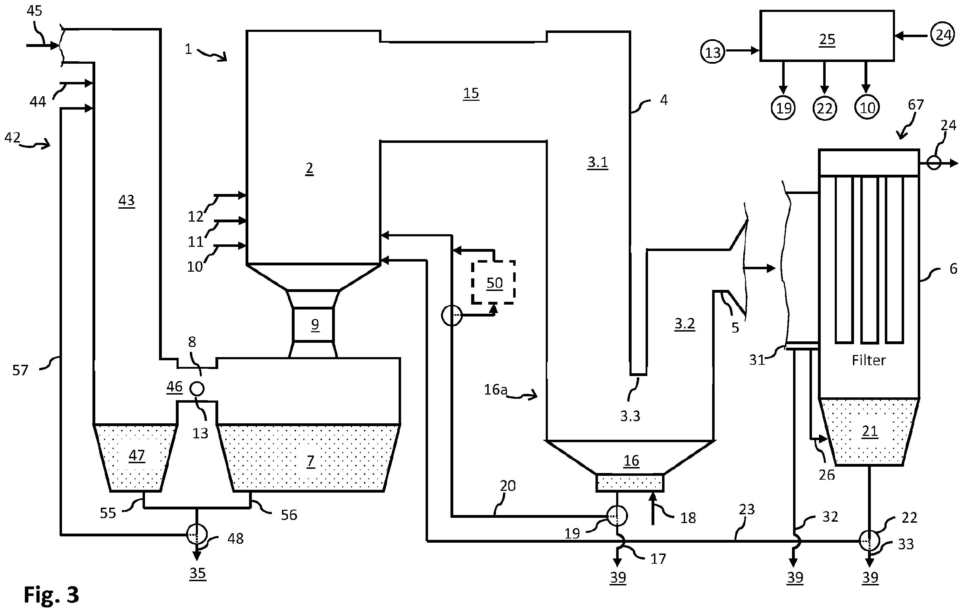

Gemäß der Fig. 3 ist dem Wirbelschichtströmungsreaktor 1 ein Vorschaltreaktor 42 vorgeschaltet. Die Abgase durchlaufen daher zunächst den Vorschaltreaktor 42, bevor sie durch die Gaszuführung 8 in den Wirbelschichtströmungsreaktor 1 eintreten.

Bei dem Vorschaltreaktor 42 handelt es sich um einen Strömungsreaktor, ausgeführt als vertikal angeordneter Hohlzylinder 43 mit einem der Gasgeschwindigkeit angepassten Querschnitt, der von oben nach unten vom Abgas durchströmt wird. Die im Vorschaltreaktor 42 aktiven Sorbentien werden an einem Anschluss 44 eingebracht. Das Abgas tritt durch eine Gaszuführung 45 am oberen Ende des Hohlzylinders 43 in den Vorschaltreaktor 42 ein.

Eine oder auch mehrere Gasabführungen 46 des Vorschaltreaktors 42 befinden sich seitlich am unteren Ende des Hohlzylinders 43. Sie gehen über in die Gaszuführung 8 des Wirbelschichtströmungsreaktors 1. Für jeden Wirbelschichtströmungsreaktor 1 können ein oder mehrere Vorschaltreaktoren 42 vorgesehen sein, die sich um den Wirbelschichtströmungsreaktor 1 herum gruppieren.

Die Geschwindigkeit des Abgases im Vorschaltreaktor 42 wird abhängig von der Schadstofflast so eingestellt, dass sie etwa 4 - 16 m/s, bestenfalls 6 - 12 m/s beträgt.

Unterhalb des Hohlzylinders 43 befindet sich ein Bunker, der Vorschaltreaktorbunker 47, der die Feststoffe einer Grobpartikelfraktion aufnimmt, die nicht von der Gasströmung in die Gasabführung 46 mitgenommen werden. Die im Vorschaltreaktorbunker 47 gesammelten Feststoffe werden über eine Ausleitung 48 aus dem Prozess ausgeschleust. Die ausgeschleusten Feststoffe können in ein Silo verbracht werden und von dort ggf. zum Sammelsilo 39 (siehe Fig. 2) geleitet werden.

Das Verfahren arbeitet zur Grobgutabscheidung und zur Sorbensaktivierung wie folgt: Ein Abgas mit z. B. hohem Chlorgehalt wird in den Vorschaltreaktor 42 zur Gas- und Feststoffabscheidung eingeleitet. Es tritt üblicherweise mit einer Temperatur von 150 - 300 °C in den Vorschaltreaktor ein.

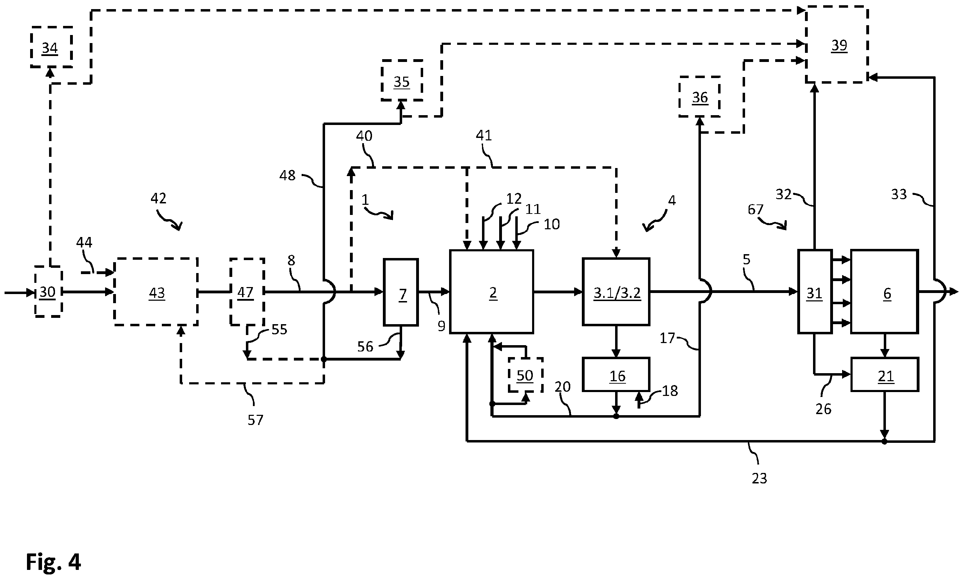

Im Folgenden soll an Hand der Fig. 4 der sich daran anschließende Prozess erläutert werden. In den Vorschaltreaktor wird als Sorbens Natriumhydrogenkarbonat (NaHCO₃) eingebracht. Bereits bei einer Temperatur von ca. 60°C beginnt im Vorschaltreaktor 42 der thermische Zerfall des Natriumhydrogenkarbonats mit "in situ"- Bildung von Natriumkarbonat unter Abspaltung des Wassers und Kohlendioxids, d. h. es entstehen Na⁺ - Ionen und CO₃²⁻ -Ionen. Die Na⁺ - Ionen reagieren dann mit den sauren Schadgasen Chlorid und Schwefeloxiden. Bei einer Temperatur von ca. 150 °C, die stromaufwärts eines Abgases meist vorliegt, verläuft dieser Zerfall mit so großer Geschwindigkeit, dass Verweilzeiten von 0,2 - 4 s ausreichen, um die Reaktionen zwischen den Natriumionen und den sauren Schadgasanteilen ablaufen zu lassen. Die Reaktionen zwischen den Natriumionen und den Chloridionen bzw. Schwefeloxiden verlaufen viel schneller als die Rekristallisationsreaktion mit dem Karbonat zu Natriumkarbonat. Dabei ist die Reaktion zwischen den Chloridionen und den Natriumionen schneller als die Reaktion zwischen den Schwefeloxiden und den Natriumionen, so dass bei dieser Verweilzeit überwiegend Chlorid aus dem Abgas abgeschieden wird.

Aus dem Vorschaltreaktorbunker 47 und/oder der Absetzkammer 7 kann noch reaktives Sorbens über eine gemeinsame Rückführleitung 57 in den Vorschaltreaktor 42 zurückgeführt werden.

Da die Reaktionsgeschwindigkeit zwischen dem Sorbens Natriumhydrogenkarbonat und dem Schadstoff Chlorwasserstoff sehr hoch ist, kann die Gasfeststoffverweilzeit im Vorschaltreaktor klein sein, z. B. auf 0,2 - 4 Sekunden, eingestellt werden, so dass die im Abgas mitgeführten Schwefeloxide (SOₓ) überwiegend unreagiert den Vorschaltreaktor 42 durchlaufen und in die Wirbelschichtkammer 2 gelangen, wo sie mit den dortigen Sorbentien eine chemische Verbindung eingehen. Um die dafür optimale Temperatur bereitzustellen, wird in die Wirbelschichtkammer 2 Wasser eingebracht.

Dies führt dort aber nicht zu Agglomerationen durch das hygroskopische Kalziumchlorid, da der überwiegende Anteil an Chlorwasserstoff, der sich in der Wirbelschichtkammer 2 mit den dortigen Sorbentien zu Kalziumchlorid umwandeln würde, zuvor mit dem Natriumhydrogenkarbonat reagiert und im Wesentlichen als nicht hygroskopisches Natriumchlorid aus dem Abgas abgeschieden wurde.

In dem Vorschaltreaktor 42 wird somit überwiegend Chlorwasserstoff aus dem Abgas entfernt, während in dem sich an den Vorschaltreaktor 42 anschließenden Wirbelschichtströmungsreaktor 1 Schwefeloxide (SOₓ) aus dem Abgas abgeschieden werden. Die Temperatur im Wirbelschichtströmungsreaktor 1 kann durch Wasserzugabe auf einen für die Reaktion der Schwefeloxide (SOₓ) mit Kalziumhydroxid optimalen Wert reduziert werden.

Durch die HCl-Abscheidung im Vorschaltreaktor 42 wird somit das HCl/SOₓ Verhältnis für die nachfolgende Reinigungsstufe verbessert, weil das Verhältnis von HCl/SOₓ in Richtung SOₓ verschoben worden ist, z. B. HCl/SOₓ < 0,2. Dadurch kann für die Wirbelschicht die Abgastemperatur auf ein Optimum zur Abgasreinigung mit Kalkhydrat gequencht werden.

Sollte die mit dem Abgasstrom in die Wirbelschichtkammer 2/Wirbelschichtabsetzkammer 7 mitgeführte Grobpartikelfraktion noch ungenutztes Natriumhydrogenkarbonat enthalten oder dieses direkt in die Wirbelschicht eingebracht worden sein, kann dieses aus der Wirbelschichtabsetzkammer 7 direkt über eine Rückführleitung 57 in den Vorschaltreaktor 42 rezirkuliert werden.

**Bezugszeichenliste**

| | | | |
|---|---|---|---|
| 1 | Wirbelschichtströmungsreak tor | 26 | Leitung |
| 2 | Wirbelschichtkammer | 30 | Vorabscheider |
| 3.1 | Strömungsstrecke | 31 | Feststoffabscheidung |
| 3.2 | Zusatzströmungsstrecke | 32 | Abzweigpunkt |
| 3.3 | Umlenkung | 33 | Abzweigpunkt |
| 4 | Strömungskammer | 34 | Silo |
| 5 | Auslass | 35 | Silo |
| | | | |
| 6 | Prozessfilter | 36 | Silo |
| 7 | Absetzkammer | 39 | Sammelsilo |
| 8 | Zuführungsleitung | 40 | Betriebsumfahrung |
| 9 | Gasbeschleuniger | | |
| 10 | Anschluss (Sorbentien) | | |
| | | | |
| 11 | Anschluss (Additive) | 41 | Betriebsumfahrung |
| 12 | Anschluss (Wasser, Dampf) | 42 | Vorschaltreaktor |
| 13 | Gasstromsensor | 43 44 | Hohlzylinder Anschluss |
| 15 | Querverbindung | 45 | Gaszuführung |
| | | | |
| 16 | Separatorbunker | 46 | Gasabführung |
| 16a | Separator | 47 | Vorschaltreaktorbunker |
| 17 | Ausleitung | 48 | Ausleitung |
| 18 | Luftanschluss | | |
| 19 | Dosiereinrichtung | | |
| 20 | Nebenrückführleitung | 50 | Aktivator |
| | | | |
| 21 | Filterbunker | 55 | Zuleitung |
| 22 | Dosiereinrichtung | | |
| 23 | Hauptrückführleitung | 56 | Zuleitung |
| 24 | Gassensor | 57 | Rückführleitung |
| 25 | Regeleinrichtung | 67 | Filteranlage |

## Patentansprüche

1. Verfahren zur Separierung von gasförmigen und partikelförmigen Stoffen aus einem Gasstrom mittels eines wirbelschichtströmungsreaktors mit einer eine expandierte Wirbelschicht aufnehmenden Wirbelschichtkammer, wobei die expandierte Wirbelschicht Feststoffe aufweist, bei denen es sich zumindest um reaktive Sorbentien und um inerte Feststoffe handelt, und wobei die Feststoffe, die in der Wirbelschicht ein Stützbett bilden, einer Großpartikelfraktion angehören,
wobei der mit den zu separierenden Stoffen beladene Gasstrom der Wirbelschicht zugeführt wird, damit in der Wirbelschicht die zu separierenden Stoffe mit den Sorbentien in Kontakt gelangen und mit ihnen reagieren,
wobei die Geschwindigkeit in der Wirbelschichtkammer so eingestellt ist, dass auch inerte Feststoffe und reaktive Sorbentien die Wirbelschicht mit dem Gasstrom verlassen,
wobei zusätzlich zu zurückgeführten Sorbentien frische Sorbentien der Wirbelschicht zugeführt werden und
wobei der die Wirbelschicht verlassende Gasstrom, bevor aus ihm inerte Feststoffe zusammen mit einem Anteil der reaktiven Sorbentien abgetrennt werden, eine antiparallel zur Wirbelschicht verlaufende abzweigungsfreie Strömungsstrecke durchläuft, die an ihrem oberen Ende einen Einlass für den Gasstrom und an ihrem unteren Ende einen seitlichen Auslass für den Gasstrom hat, wobei im Durchlauf Sorbentien und zu separierende Stoffe innerhalb des Gasstromes in Kontakt gelangen und miteinander reagieren, so dass der Anteil der nicht reagierten Stoffe im Gasstrom am Ende der Strömungsstrecke kleiner ist als ihr Anteil beim Austritt aus der Wirbelschicht,
wobei unterhalb des seitlichen Auslasses die Strömungsstrecke in einen Separatorbunker für gravitativ aus dem Gasstrom abgetrennte Feststoffe übergeht, wobei die Feststoffe der Großpartikelfraktion aufgrund ihrer Größe und wegen der auf sie einwirkenden Gasströmung gravitativ an dem seitlichen Auslass vorbei weiter nach unten fallen und in dem Separatorbunker zwischengespeichert werden, so dass die Umlenkung des Gasstroms in den Auslass als Separator für eine Großpartikelfraktion im Gasstrom wirkt,
wobei ein Teil der Feststoffe, in dem sich die Großpartikelfraktion befindet, aus dem Separatorbunker über eine den Nebenpfad bildende Nebenrückführleitung in die Wirbelschichtkammer zurückgeführt wird; wobei inerte Feststoffe und reaktive Sorbentien abgetrennt werden und beide teilweise über die Nebenrückführleitung in die Wirbelschicht zurückgeführt werden,
wobei aus dem die Wirbelschicht verlassenden Gasstrom Feststoffe der **Mittel- und Feinpartikelfraktion an einem der Strömungsstrecke nachgeschalteten Prozessfilter abgeschieden** und in eine einen Hauptpfad bildenden Rückführleitung abgetrennt werden, durch die **reaktive** Sorbentien in die Wirbelschicht zurückgeführt werden, und
wobei der dem Wirbelschichtströmungsreaktor zugeführte Gasstrom mit zu separierenden Stoffen beladen ist, die eine Großpartikelfraktion bilden, wobei der mit den Partikeln beladene Gasstrom der Wirbelschicht zugeführt wird, wobei die Wirbelschicht so betrieben wird, dass die Rate der mit dem Gasstrom ausgetragenen Großpartikelfraktion nicht kleiner ist als die Rate der mit dem Gasstrom zugeführten Großpartikelfraktion,
und wobei die Großpartikelfraktion erst nach Durchlaufen des Wirbelschichtströmungsreaktors dem Abgasstrom entnommen wird.

2. Verfahren nach Anspruch 1, **dadurch gekennzeichnet, dass** die Strömungsstrecke durch eine antiparallel zur Wirbelschichtkammer verlaufende Strömungskammer realisiert ist.

3. Verfahren nach Anspruch 1 oder 2, **dadurch gekennzeichnet, dass** die Rate der nicht reagierten zu separierenden Stoffe in dem Gasstrom nach Verlassen der Strömungsstrecke gemessen wird,
dass die Zufuhr von frischen Sorbentien erhöht wird, wenn sich die Rate der nicht reagierten zu separierenden Stoffe im Gasstrom über einen vorgegebenen Sollwert hinaus erhöht hat.

4. Verfahren nach einem der vorhergehenden Ansprüche, **dadurch gekennzeichnet, dass** die Rückführungsrate der in den Nebenpfad abgetrennten Feststoffe und reaktiver Sorbentien in Abhängigkeit von der Änderung des Volumenstromes des in die Wirbelschicht eintretenden Gasstromes geändert wird.

5. Verfahren nach Anspruch 4, **dadurch gekennzeichnet, dass** zu einem bestimmten Grundvolumenstrom eine Grundrückführungsrate festgelegt wird, dass die Rückführungsrate gegenüber der Grundrückführungsrate angehoben wird, wenn sich der Volumenstrom gegenüber dem Grundvolumenstrom vergrößert, und dass die Rückführungsrate gegenüber der Grundrückführungsrate erniedrigt wird, wenn sich der Volumenstrom gegenüber dem Grundvolumenstrom erniedrigt.

6. Verfahren nach einem der vorhergehenden Ansprüche, **dadurch gekennzeichnet, dass** der Strömungsstrecke ein Prozessfilter nachgeschaltet ist und dass die dort abgetrennten Feststoffe zu einer Mittelpartikelfraktion und einer Feinpartikelfraktion gehören, die in die Wirbelschicht prozessabhängig zurückgeführt werden.

7. Verfahren nach Anspruch 6, **dadurch gekennzeichnet, dass** zwischen dem Auslass der Strömungsstrecke und dem Eintritt in den Prozessfilter eine Zusatzströmungsstrecke angeordnet ist.

8. Verfahren nach einem der vorhergehenden Ansprüche, **dadurch gekennzeichnet, dass** der dem Wirbelschichtströmungsreaktor zugeleitete Gasstrom zuvor durch einen als Strömungsreaktor ausgebildeten Vorschaltreaktor geleitet wird.

9. Verfahren nach Anspruch 8, **dadurch gekennzeichnet, dass** der Vorschaltreaktor Sorbentien beinhaltet, die den Abbau einer ersten zu separierenden Stoffart bei der Temperatur des Gasstromes begünstigt und dass die Wirbelschichtkammer des Wirbelschichtströmungsreaktors Sorbentien beinhaltet, die den Abbau einer zweiten zu separierenden Stoffart bei einer Temperatur begünstigt, die niedriger ist, als die Temperatur des Gasstromes bei Eintritt in den Vorschaltreaktor, und dass die Reduzierung der Temperatur in der wirbelschichtkammer durch Quenchen erfolgt.

10. Verfahren nach einem der vorhergehenden Ansprüche, **dadurch gekennzeichnet, dass** Teile des Gasstroms in einer Betriebsumfahrung vom Einlass zum Wirbelschichtreaktor unter Umgehung eines Gasbeschleunigers des Wirbelschichtreaktors unmittelbar in die Wirbelschicht geleitet werden.

## Claims

1. A method for the separation of gaseous or particulate substances from a gas flow by means of a fluidized bed flow reactor having a fluidized bed chamber containing an expanded fluidized bed, wherein the expanded fluidized bed comprises solids, which are at least reactive sorbents and inert solids, and wherein the solids, which form a support bed in the expanded fluidized bed, belong to a large particle fraction,
wherein the gas flow laden with the substances to be separated is supplied to the fluidized bed so that the substances to be separated come into contact with the sorbents in the fluidized bed and react with them,
wherein the velocity in the fluidized bed chamber is set in such a way that inert solids and reactive sorbents also leave the fluidized bed with the gas flow,
wherein, in addition to recirculated sorbents, fresh sorbents are supplied to the fluidized bed and
wherein the gas flow leaving the fluidized bed, before inert solids together with a proportion of active sorbents are separated from it, passes through a branch-free flow path running anti-parallel to the fluidized bed, the branch-free flow path having an inlet for the gas flow at its upper end and a lateral outlet at its lower end, wherein sorbents and substances to be separated come into contact and react with each other within the gas flow while passing through so that the proportion of unreacted substances in the gas flow at the end of the flow path is smaller than their proportion on leaving the fluidized bed,
wherein, below the lateral outlet, the flow path merges into a separator hopper for solids gravitationally separated from the gas flow, wherein the solids belonging to the large particle fraction fall further downwards gravitationally past the lateral outlet, due to their size and due to the flow of gas acting upon them, and are stored temporarily in the separator hopper so that the deflection of the gas flow into the outlet acts as a separator for a large particle fraction,
wherein a portion of the solids, containing the large particle fraction, is returned from the separator hopper to the fluidized bed chamber via a secondary return line forming the secondary path, wherein inert solids and reactive sorbents are separated and both are partially recirculated to the fluidized bed via the secondary return line,
wherein solids belonging to the middle and fine particle fraction are removed from the gas flow leaving the fluidized bed at a process filter downstream of the flow path and are separated into a return line forming a main path through which reactive sorbents are recirculated to the fluidized bed,
wherein the gas flow supplied to the fluidized bed flow reactor is laden with substances to be separated, which form a large particle fraction, wherein the gas flow laden with the particles is supplied to the fluidized bed, wherein the fluidized bed is operated such that the rate of the large particle fraction discharged with the gas flow is not lower than the rate of the large particle fraction supplied with the gas flow,
and wherein the large particle fraction is removed from the exhaust gas flow only after passing through the fluidized bed flow reactor.

2. The method according to claim 1, **characterized in that** the flow path is achieved by a flow chamber running anti-parallel to the fluidized bed chamber.

3. The method according to claim 1 or 2, **characterized in that** the rate of unreacted substances to be separated in the gas flow after leaving the flow path is measured, and that the supply of fresh sorbents is increased when the rate of the unreacted substances to be separated in the gas flow has increased beyond a predetermined target value.

4. The method according to one of the preceding claims, **characterized in that** the return rate of the separated solids and reactive sorbents in the secondary path is changed depending on the change in the volume flow of the gas flow entering the fluidized bed.

5. The method according to claim 4, **characterized in that** a base return rate is determined for a specified base volume flow, that the return rate is increased with respect to the base return rate when the volume flow increases with respect to the base volume flow, and that the return rate is decreased with respect to the base return rate when the volume flow decreases with respect to the base volume flow.

6. The method according to one of the preceding claims, **characterized in that** a process filter is downstream of the flow path and that the solids separated there belong to a middle particle fraction and a fine particle fraction, which are recirculated to the fluidized bed dependent on the process.

7. The method according to claim 6, **characterized in that** an additional flow path is arranged between the outlet of the flow path and the entrance to the process filter.

8. The method according to one of the preceding claims, **characterized in that** the gas flow fed to the fluidized bed flow reactor is conducted beforehand through an upstream reactor configured as a flow reactor.

9. The method according to claim 8, **characterized in that** the upstream reactor contains sorbents which promote the reduction of a first type of substance to be separated at the temperature of the gas flow and that the fluidized bed chamber of the fluidized bed flow reactor contains sorbents which promote the reduction of a second type of substance to be separated at a temperature which is lower than the temperature of the gas flow when entering the upstream reactor, and that the reduction of the temperature in the fluidized bed chamber takes place by quenching.

10. The method according to one of the preceding claims, **characterized in that** parts of the gas flow are conducted directly into the fluidized bed in an operating bypass from the inlet to the fluidized bed reactor, bypassing the gas accelerator of the fluidized bed reactor.

## Revendications

1. Procédé pour séparer des substances gazeuses et particulaires d'un flux de gaz au moyen d'un réacteur d'écoulement à lit fluidisé avec une chambre de lit fluidisé réceptionnant un lit fluidisé expansé, dans lequel le lit fluidisé expansé présente des matières solides concernant lesquelles il s'agit au moins de sorbants réactifs et de matières solides inertes, et dans lequel les matières solides, lesquelles forment un lit de support dans le lit fluidisé, font partie d'une fraction de grosses particules,
dans lequel le flux de gaz chargé avec les substances à séparer est amené au lit fluidisé pour que, dans le lit fluidisé, les substances à séparer arrivent en contact avec les sorbants et réagissent avec ceux-ci,
dans lequel la vitesse dans la chambre de lit fluidisé est réglée de telle sorte qu'également des matières solides inertes et des sorbants réactifs quittent le lit fluidisé avec le flux de gaz,
moyennant quoi, en plus de sorbants ramenés, des sorbants frais sont amenés au lit fluidisé, et
dans lequel le flux de gaz quittant le lit fluidisé, avant la séparation à partir de celui-ci de matières solides inertes ensemble avec une fraction des sorbants réactifs, passe par un trajet d'écoulement sans dérivation s'étendant de manière antiparallèle au lit fluidisé, lequel a une entrée à son extrémité supérieure pour le flux de gaz et une sortie latérale à son extrémité inférieure pour le flux de gaz, dans lequel, lors du passage, des sorbants et des substances à séparer à l'intérieur du flux de gaz arrivent en contact et réagissent entre eux, de sorte que la fraction de substances n'ayant pas réagi dans le flux de gaz est inférieure, à la fin du trajet d'écoulement, à sa fraction lors de la sortie du lit fluidisé,
dans lequel, en-dessous de la sortie latérale, le trajet d'écoulement se transforme en un réservoir de séparation pour des matières solides séparées par gravité du flux de gaz, dans lequel les matières solides de la fraction de grosses particules, en raison de leur taille et du fait du flux de gaz agissant sur celles-ci, tombent par gravité plus loin vers le bas en passant à côté de la sortie latérale et sont stockées de façon intermédiaire dans, le réservoir de séparation, de sorte que la déviation du flux de gaz dans la sortie agit en tant que séparateur pour une fraction de grosses particules dans le flux de gaz,
dans lequel une partie des matières solides dans laquelle la fraction de grosses particules se trouve est ramenée du réservoir de séparation via une conduite de retour auxiliaire formant le chemin auxiliaire dans la chambre de lit fluidisé ; dans lequel des matières solides inertes et des sorbants réactifs sont séparés, et les deux sont ramenés en partie, via la conduite de retour auxiliaire, dans le lit fluidisé,
dans lequel, à partir du flux de gaz quittant le lit fluidisé, des matières solides de la fraction de particules moyennes et fines se déposent au niveau d'un filtre de traitement monté en aval du trajet d'écoulement et sont séparées dans une conduite de retour, formant un chemin principal, à travers laquelle les sorbants réactifs sont ramenés dans le lit fluidisé, et
dans lequel le flux de gaz amené au réacteur d'écoulement à lit fluidisé est chargé de substances à séparer, lesquelles forment une fraction de grosses particules, dans lequel le flux de gaz chargé des particules est amené au lit fluidisé, dans lequel le lit fluidisé est exploité de telle sorte que le taux de la fraction de grosses particules évacuée avec le flux de gaz n'est pas inférieur au taux de la fraction de grosses particules amenée avec le flux de gaz,
et dans lequel la fraction de grosses particules est prélevée du flux de gaz d'échappement seulement après le passage par le réacteur d'écoulement à lit fluidisé.

2. Procédé selon la revendication 1, **caractérisé en ce que** le trajet d'écoulement est réalisé par une chambre d'écoulement s'étendant de façon antiparallèle à la chambre de lit fluidisé.

3. Procédé selon la revendication 1 ou 2, **caractérisé en ce que** le taux de substances à séparer n'ayant pas réagi dans le flux de gaz est mesuré après avoir quitté le trajet d'écoulement,
**que** l'amenée de sorbants frais est intensifiée si le taux de substances à séparer n'ayant pas réagi dans le flux de gaz a augmenté au-delà d'une valeur de consigne prescrite.

4. Procédé selon l'une des revendications précédentes, **caractérisé en ce que** le taux de retour des matières solides et sorbants réactifs séparés dans le chemin auxiliaire est modifié en fonction de la variation du débit volumique du flux de gaz entrant dans le lit fluidisé.

5. Procédé selon la revendication 4, **caractérisé en ce que**, pour un débit volumique de base défini, on détermine un taux de retour de base, que le taux de retour est élevé par rapport au taux de retour de base si le débit volumique augmente par rapport au débit volumique de base, et que le taux de retour est abaissé par rapport au taux de retour de base si le débit volumique diminue par rapport au débit volumique de base.

6. Procédé selon l'une des revendications précédentes, **caractérisé en ce qu'**un filtre de traitement est monté en aval du trajet d'écoulement et que les matières solides qui y sont séparées appartiennent à une fraction de particules moyennes et une fraction de particules fines, lesquelles sont ramenées dans le lit fluidisé en fonction du processus.

7. Procédé selon la revendication 6, **caractérisé en ce qu'**entre la sortie du trajet d'écoulement et l'entrée dans le filtre de traitement est disposé un trajet d'écoulement supplémentaire.

8. Procédé selon l'une des revendications précédentes, **caractérisé en ce que** le flux de gaz amené vers le réacteur d'écoulement à lit fluidisé est préalablement conduit à travers un réacteur amont réalisé en tant que réacteur d'écoulement.

9. Procédé selon la revendication 8, **caractérisé en ce que** le réacteur amont contient des sorbants qui favorisent la décomposition d'un premier type de substance à séparer à la température du flux de gaz et que la chambre de lit fluidisé du réacteur d'écoulement à lit fluidisé contient des sorbants qui favorisent la décomposition d'un deuxième type de substance à séparer à une température qui est inférieure à la température du flux de gaz à l'entrée dans le réacteur amont, et que la réduction de la température dans la chambre de lit fluidisé s'effectue par refroidissement.

10. Procédé selon l'une des revendications précédentes, **caractérisé en ce que** des parties du flux de gaz, dans un contournement de fonctionnement, sont conduites de l'entrée vers le réacteur à lit fluidisé en contournant un accélérateur de gaz du réacteur à lit fluidisé, directement dans le lit fluidisé.
